# EUROPEAN PATENT SPECIFICATION

(11) **EP 2 447 923 B1**
(45) Date of publication and mention of the grant of the patent: **20.05.2015**
(21) Application number: 10189678.5
(22) Date of filing: 02.11.2010
(51) Int. Cl.: G08G 1/01, G06Q 10/00, G01C 21/34, G06Q 10/10

(54) **Traffic information based on trusted group behaviour**
Auf zuverlässigem Gruppenverhalten basierte Verkehrsinformation
Informations sur le trafic basées sur un comportement de groupe fiable

(43) Date of publication of application: 02.05.2012
(73) Proprietor: BlackBerry Limited, Waterloo, ON N2K 0A7 (CA)
(72) Inventor: Cumming, Joel George, Waterloo Ontario N2L 0A4 (CA)
(74) Representative: Patel, Binesh

(56) References cited:
- WO-A1-2008/034264
- US-A1- 2009 157 613

## Description

### TECHNICAL FIELD

The present technology relates to mobile devices and, in particular, to mobile devices having navigation capabilities.

### BACKGROUND

Portable electronic devices or mobile devices such as GPS-enabled wireless communications devices are increasingly popular. One of the most popular and useful features on these devices is GPS-based real-time navigation. Some recent navigation applications have also begun to provide real-time traffic information to mobile users. Real-time traffic information enables mobile users to make intelligent navigation decisions, e.g. avoiding a traffic jam on a given route. Some applications like traffic.com provide real-time traffic information and propose alternate routes. However, one downside of this approach to real-time traffic data is that the data is aggregated. Where there are insufficient samples in a given area of roadway, the data can be misleading or inaccurate. This is significant particularly for suggested alternate routes for which data may not be sufficient to infer a traffic condition with any degree of accuracy.

US2009/0157613 discloses means for creating a travel community such that a user travelling to a destination may be able to communicate or meet other users travelling to the same destination.

Accordingly, there is a need to provide an improved technique for providing real-time traffic data to a mobile device, particularly as it relates to alternate routing. According to the invention we provide a method of providing real-time traffic information as defined in claim 1, a computer readable medium as defined in claim 9 and a mobile device as defined in claim 10

### BRIEF DESCRIPTION OF THE DRAWINGS

Further features and advantages of the present technology will become apparent from the following detailed description, taken in combination with the appended drawings, in which:
FIG. 1 depicts an exemplary wireless communications device as one example of a mobile device on which the present technology may be implemented;
FIG. 2 depicts a flowchart of the main steps of a method of providing real-time traffic information;
FIG. 3 depicts additional optional steps of the method of FIG. 2;
FIG. 4 depicts an example in which three users in a trusted group travel via three different routes to a common destination;
FIG. 5 depicts an example of how a trusted group may be defined using a social network;
FIG. 6 depicts an example of how a trusted group may be defined from within an e-mail application;
FIG. 7 depicts an example of how a trusted group may be defined using an instant messaging group; and
FIG. 8 depicts an example of how a trusted group may be defined using a calendar event.

It will be noted that throughout the appended drawings, like features are identified by like reference numerals.

### DETAILED DESCRIPTION

In general, the present technology provides an innovative technique for providing real-time traffic information. A trusted group of mobile device users share traffic data about traffic conditions on alternate routes to a common destination. By comparing the traffic data for the alternate routes, the quickest route to the destination can be determined.

Thus, a main aspect of the present technology is a method of providing real-time traffic information. The method entails defining a trusted group of mobile devices traveling to a common destination, obtaining traffic data from the mobile devices of the trusted group, and determining traffic information based on the traffic data for a plurality of routes to the common destination.

Another main aspect of the present technology is a computer readable medium (or machine readable medium) comprising instructions in code which when loaded into memory and executed on a processor of a mobile device causes the steps of the foregoing method to be performed.

Yet another main aspect of the present technology is a mobile device having a memory operatively coupled to a processor for executing a navigation application on the mobile device. The mobile device also has a user interface for defining a trusted group of mobile devices that are traveling to a common destination. A radiofrequency transceiver operatively coupled to the processor receives real-time traffic data from the trusted group of mobile devices. The user interface provides traffic information based on the real-time traffic data received from the trusted group of mobile devices.

The details and particulars of these aspects of the technology will now be described below, by way of example, with reference to the attached drawings.

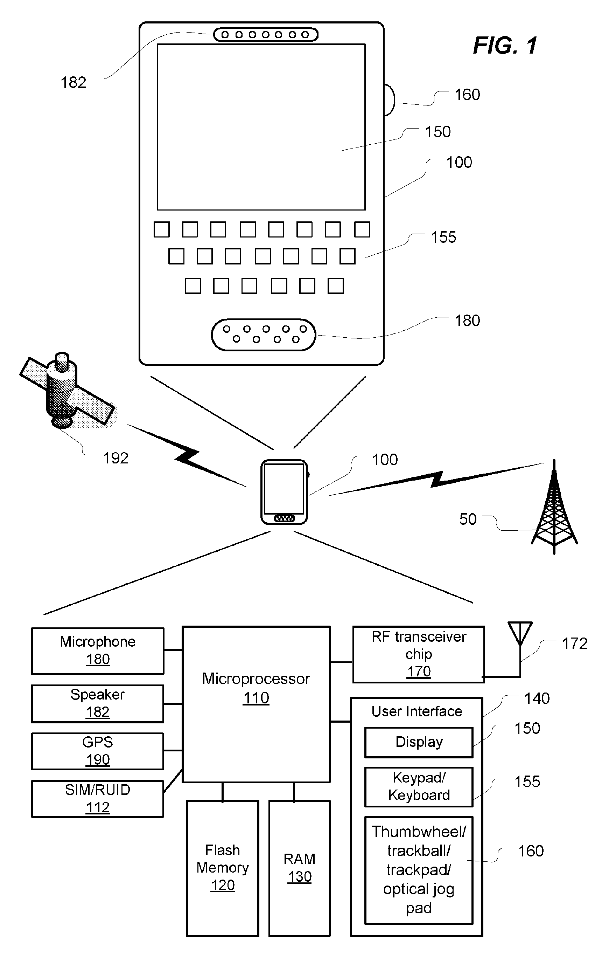

FIG. 1 is a schematic depiction of a wireless communications device 100 as one example of a portable electronic device or mobile device on which the present technology can be implemented. The terms "mobile device" or "wireless communications device" are meant to encompass a broad range of cellular or other portable electronic devices such as, for example, smart phones, cell phones, satellite phones, wireless-enabled personal digital assistants (PDAs), wireless-enabled computing tablets, wireless-enabled laptops, etc.

As shown schematically in FIG. 1, the wireless communications device 100 includes a microprocessor (referred to herein as a "processor") 110 operatively coupled to memory (Flash Memory 120 and/or RAM 130). The device may include a SIM card 112 or equivalent. The device 100 has a user interface 140 which includes a display (e.g. an LCD screen) 150, a keyboard/keypad 155. A thumbwheel (or trackball or track pad or optical jog pad) 160 may optionally be provided as part of the user interface. Alternatively, the user interface 140 may include a touch screen in lieu of a keyboard/keypad. The wireless communications device 100 includes a radiofrequency (RF) transceiver chipset 170 for wirelessly transmitting and receiving data (e.g. map data) and voice communications, e.g. via a cellular network. The wireless communications may be performed using CDMA, GSM, or any other suitable communications standard or protocol. A microphone 180 and speaker 182 (and/or jack for earphones) are provided for voice communications.

As further depicted in FIG. 1, the wireless communications device or mobile device 100 may include a GPS chipset 190 (or other position-determining subsystem) to determine the current location of the device from radiofrequency signals emitted by a plurality of orbiting GPS satellites. The GPS chipset or other position-determining subsystem enables a navigation application to be executed on the device.

Although the present disclosure refers to expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of position-determining subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Radiolocation techniques may also be used in conjunction with GPS in a hybrid positioning system.

References herein to "GPS" are meant to include Assisted GPS and Aided GPS.

This novel mobile device 100 has its memory 120, 130 operatively coupled to the processor 110 for executing a navigation application. The user interface 140 is adapted to define a trusted group of mobile devices that are traveling to a common destination. Defining the trusted group may entail selecting or identifying mobile devices associated with particular users (friends, contacts, buddies) that travel, have travelled, or will be travelling the same route. The radiofrequency transceiver 170, which is operatively coupled to the microprocessor 110, is adapted to receive real-time traffic data over the air (i.e. wirelessly) from the trusted group of mobile devices. The user interface provides traffic information (also referred to herein as traffic conditions) based on the real-time traffic data received from the trusted group of mobile devices.

In one specific implementation, the user interface includes a display screen which displays the traffic information for one or more alternate routes. For example, a map may show alternate routes with estimated travel times, average speeds, or estimated times of arrival, etc. In a variant, the optimal (fastest) route may be highlighted, coloured, or otherwise visually identified. Alternatively, the traffic conditions for each of the alternate routes may simply be described in text (i.e. without a map), e.g. Destination A via Highway One: ETA 2:03 p.m., Destination A via King Street: ETA 2:07 p.m.

In one specific implementation, the user interface includes a speaker and a text-to-speech module for providing audible traffic information for one or more alternate routes. The audible traffic information may be presented a predetermined amount of time prior to arriving at a decision point (intersection) so that the user has sufficient time to make a decision about which alternate route to take. In a variant, the audible traffic information may be presented in response to user input, e.g. a voice command.

It will be appreciated that the traffic conditions may be presented both visually and audibly for a richer user experience.

In one specific implementation, the user interface is adapted to enable the user to select mobile devices associated with users who are invited to an event stored in a calendar application. For this implementation, the device has a calendar application or agenda on the device. An event is accessed. A menu item, button or other user interface element is provided to enable the user to create a trusted driving group based on the invitees to the event. In a variant, the user is presented with an option to select all the invitees to the event or to individually select a subset of the invitees.

In another implementation, the trusted group is defined by selecting mobile devices associated with users linked via a social network. For this implementation, the e-social networking application on the device has a menu item, button or user interface element that enables the user to create a trusted driving group by selecting friends or contacts in the social network.

In another implementation, the trusted group is defined by selecting mobile devices associated with users from an instant messaging group. For this implementation, the IM application on the device has a menu item, button or user interface element that enables the user to create a trusted driving group from a given IM group.

In another implementation, the trusted group is defined by selecting mobile devices associated with e-mail addresses contained in fields of an e-mail message. For this implementation, the e-mail application on the device has a menu item, button or user interface element that enables the user to create a trusted driving group from the list of sender and recipients of a given e-mail message.

In another implementation, the processor is further configured to obtain historical driving data for each member of the trusted group, adjust the traffic data for each member of the trusted group based on the historical driving data for each respective member, and determine an optimal alternate route based on adjusted traffic data. In this implementation, the processor adjusts the driving times or estimated times of arrival based on the historical driving patterns of the individual members in the group. If a driver is historically known to be a slow driver, the estimated travel time is adjusted downwardly for the present user (who would drive faster along that same route). Conversely, if a driver is historically known to be a fast driver, the estimated travel time is adjusted upwardly. This implementation is best understood with the aid of a simple example. Consider that a trusted group is formed with friends Janet and Shannon. Janet is a slow driver and Shannon is known to speed. Assume Janet's ETA is 2:05 and Shannon's 2:04. However, after adjusting for the driving patterns of Janet and Shannon, the adjusted ETA for Janet's route is 2:03 while the adjusted ETA for Shannon's route is 2:06. In this example, after making the appropriate adjustments, the mobile device would conclude that Janet's route may actually be faster.

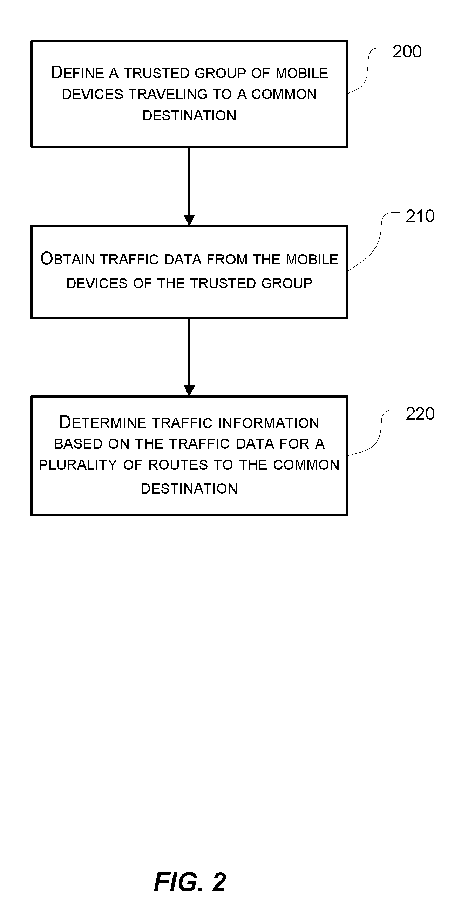

Another aspect of the present technology is a novel method of providing real-time traffic information. Main steps of this method are presented in the flowchart depicted in FIG. 2. The method entails a step 200 of defining a trusted group of mobile devices traveling to a common destination. Subsequently, as step 210, the method involves obtaining traffic data from the mobile devices of the trusted group. At step 220, the method then involves determining traffic information (i.e. traffic conditions) based on the traffic data for a plurality of routes to the common destination.

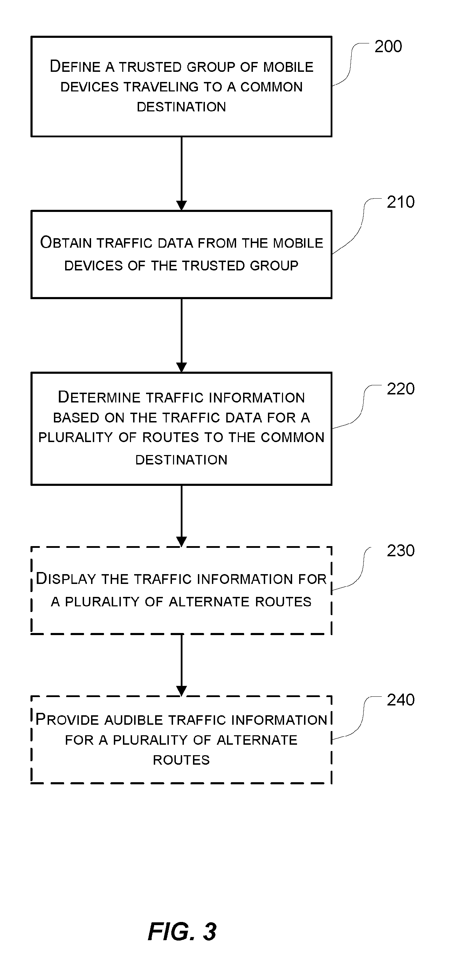

As further depicted in the flowchart of FIG. 3, the method may further entail displaying the traffic information for a plurality of alternate routes and/or providing audible traffic information for a plurality of alternate routes.

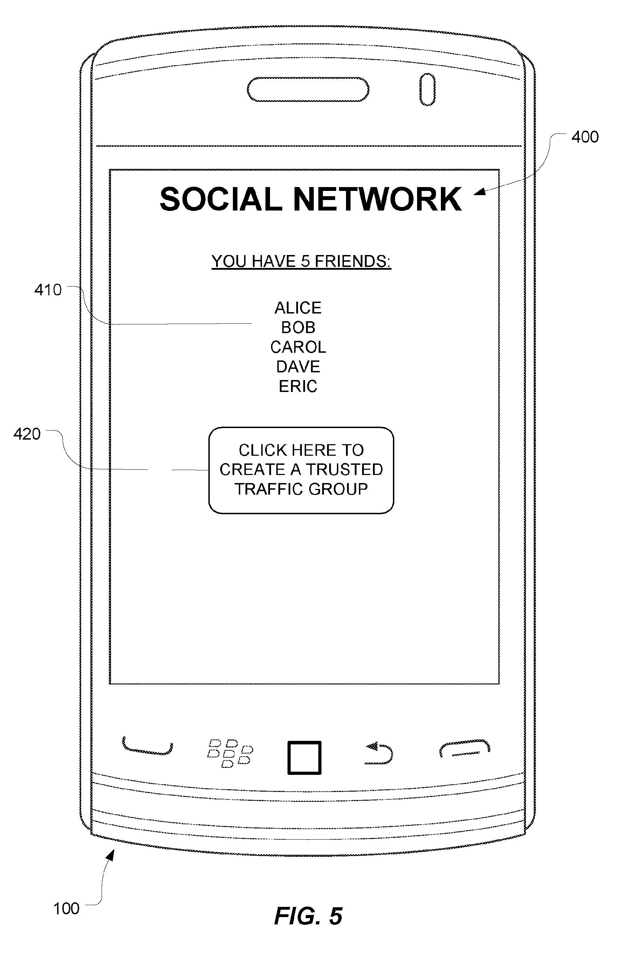

Defining the trusted group may entail selecting mobile devices associated with users who are invited to an event stored in a calendar application, or selecting mobile devices associated with users linked via a social network, or selecting mobile devices associated with users from an instant messaging group, or selecting mobile devices associated with e-mail addresses contained in fields of an e-mail message. These variants are described below in greater detail with reference to FIGS. 5-8.

In one implementation of this method, determining traffic information may entail steps of obtaining historical driving data for each member of the trusted group, adjusting the traffic data for each member of the trusted group based on the historical driving data for each respective member, and determining an optimal alternate route based on adjusted traffic data.

The foregoing method steps can be implemented in hardware, software, firmware or as any suitable combination thereof. That is, the computer-readable medium comprises instructions in code which when loaded into memory and executed on a processor of a mobile device is adapted to perform acts of defining a trusted group of mobile devices traveling to a common destination, obtaining traffic data from the mobile devices of the trusted group, and determining traffic information based on the traffic data for a plurality of routes to the common destination.

These method steps may be implemented as software, i.e. as coded instructions stored on a computer readable medium which performs the foregoing steps when the computer readable medium is loaded into memory and executed by the microprocessor of the mobile device. A computer readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

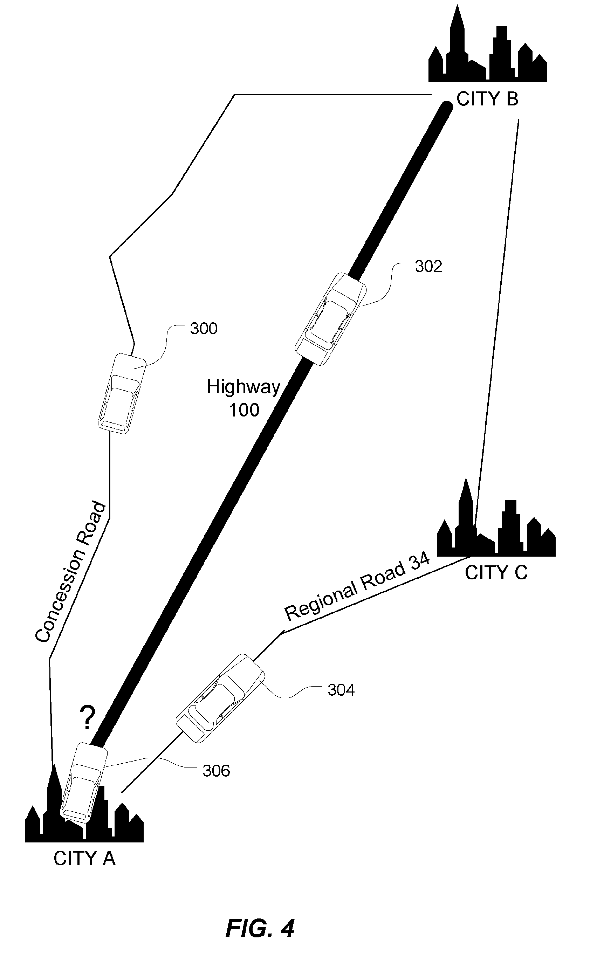

Operation of the above-described technology will now be illustrated with an example presented in FIG. 4. In this figure, it is assumed that four users have formed a trusted driving group (or trusted traffic-data-exchange group). The users are Alice in vehicle 300, Bob in vehicle 302, Carol in vehicle 304 and Dave in vehicle 306. Alice, Bob, Carol and Dave are driving from City A to City B, i.e. they have a common destination (and are driving at substantially the same time). Alice has chosen to take a rural route along Concession Road from City A to City B in the hopes of avoiding traffic. Bob prefers the big highway and is willing to risk running into a traffic jam, so he takes Highway 100. Carol, for her part, prefers to take Regional Road 34 via City C. Dave is the last one to depart, and is unsure which route to take. Dave is, in this example, the main beneficiary of the data sharing as he is last to depart. Dave receives shared traffic data from the three other users who have already departed ahead of him. The traffic conditions for the three alternate routes are known to Dave (or at least known to the extent that the routes have been traveled by the other users). Dave can then make an intelligent decision about which to take. Alternatively, his navigation application executing on the mobile device can automatically determine which route to take based on the shared traffic data. As each of the four users travel from City A to City B, traffic data for each of these alternate routes is shared amongst the users of the group. The users can take detours or re-route as required to minimize their travel time. The navigation application in its mobile device can re-calculate travel times on the fly and re-route the users to alternate routes.

As noted above, defining the trusted traffic-data-sharing group may entail selecting mobile devices associated with users based on their membership or involvement in a social network, their inclusion in an IM group, e-mail field, contact list, or address book, or their invitation (or acceptance thereof) to a calendared event.

These various ways of defining or creating a trusted driving group are now described in greater detail with reference to FIGS. 5-8.

FIG. 5 depicts an example of how a trusted group may be defined using a social network. As depicted in FIG. 5, a social network application 400 running on a mobile device 100 presents a list or compilation of users 410 (i.e. friends, contacts, buddies, followers, etc). These users 410 (friends, contacts, etc.) may be selected to define a trusted driving group. An example of a user interface element 420 for creating such a group is shown in this figure.

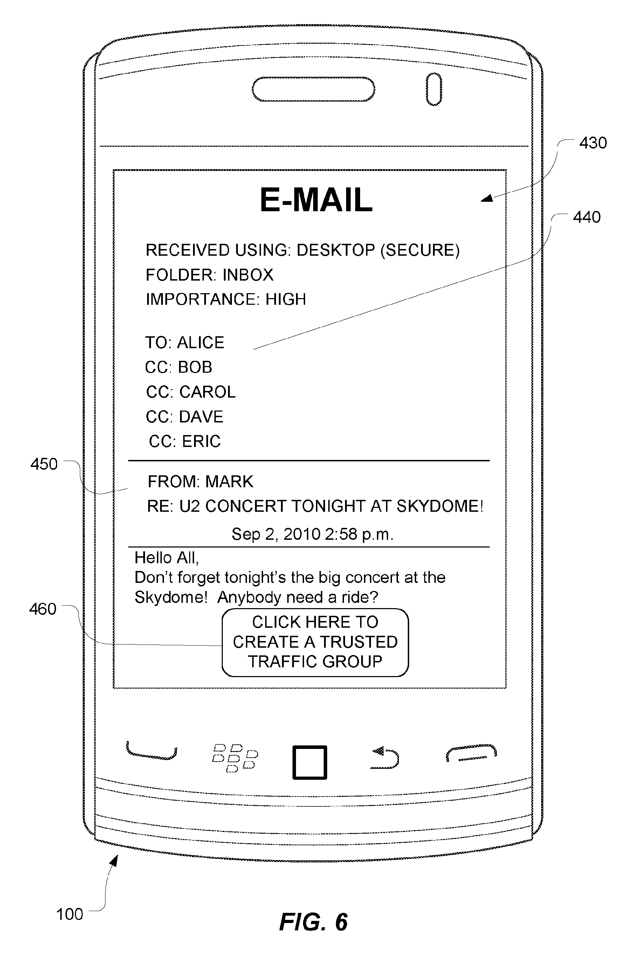

FIG. 6 depicts an example of how a trusted group may be defined from within an e-mail application 430 executing on the mobile device 100. The users whose e-mail addresses appear in the TO, FROM, CC and/or BCC fields 440, 450 may be selected to define a trusted driving group. A user interface element 460 is provided to trigger the creation of a group from these users. Alternatively, the contact list or address book may be accessed to provide the user with the ability to select contacts from the address book for inclusion in a trusted driving group.

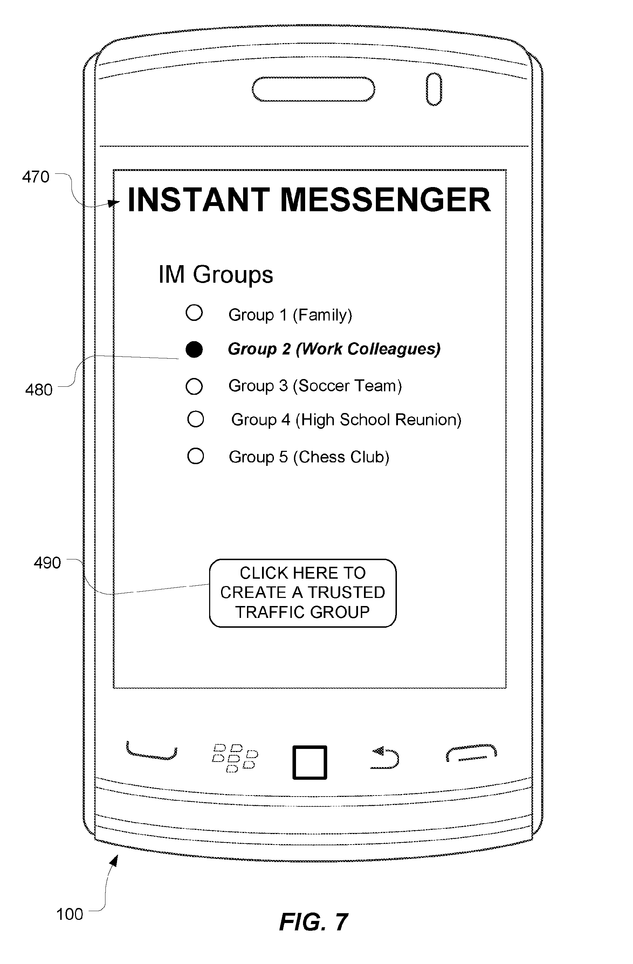

FIG. 7 depicts an example of how a trusted group may be defined using an instant messaging group. As depicted in FIG. 7, an IM application 470 enables the creation and storage of IM groups (or chat groups) 480. One or more of these IM groups may be selected to initiate a chat with that group. A user interface element 490 is provided to also enable a selected group to be defined as a trusted driving group. In the example depicted in FIG. 7, the Work Colleagues Group has been highlighted (selected). The user can create a trusted driving group from that group of users by simply clicking on the user interface element 490.

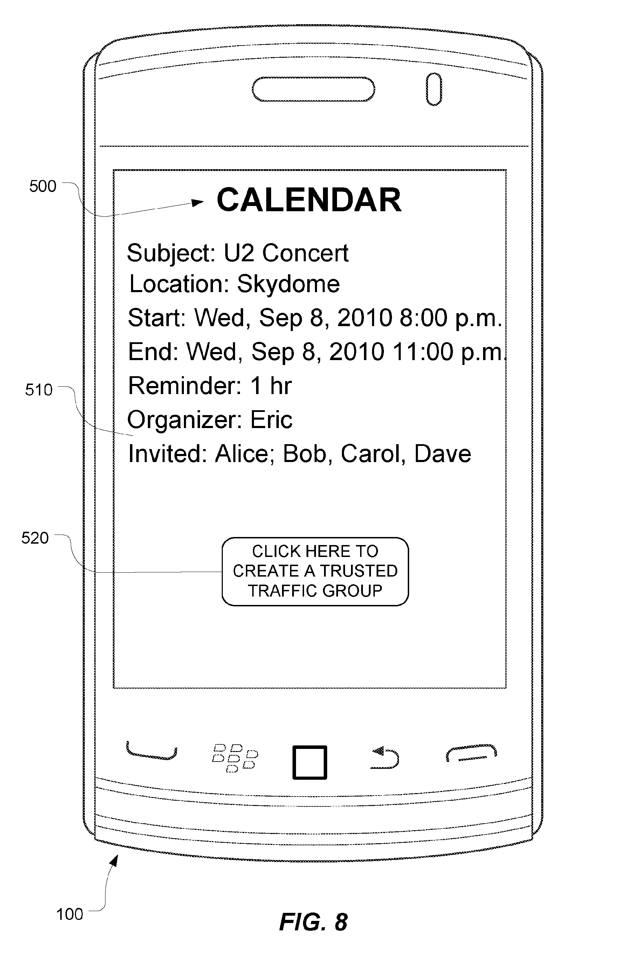

FIG. 8 depicts an example of how a trusted group may be defined using a calendar event stored in a calendar application 500 being executed on the mobile device 100. In this example, the calendar event is a U2 concert at the Skydome in Toronto. The organizer and invitees 510 can be grouped together to form a trusted driving group by clicking on the user interface element 520. This would enable work colleagues who are attending the U2 concert to share traffic data as their commute to the Skydome over various different routes.

In another implementation of this technology, the traffic conditions or traffic information that is determined based on any trusted group can also be combined with aggregated or anonymous real-time traffic data from any other source. In one particular implementation, the device may be configured to take both types of data traffic into consideration. Alternatively, the device may permit the user to switch from aggregated/anonymous data to trusted user data. In another implementation, the device may present the traffic conditions based on the aggregated/anonymous data as a default and only override or refine those conditions when trusted users are actually driving.

In another implementation of this technology, the device may be configured to set up a recurring common destination. This would be useful in a commuter situation where a group of users commute between the same cities or locations. For example, if a group of users commute to work everyday between Toronto and Waterloo, these users may define Waterloo as a common destination. Traffic data is then pooled or shared amongst the users of the user group.

In a variant, the device may automatically obtain the traffic data based on time and location. For example, if the device is located in Toronto on a weekday morning, it will presume that the user is going to commute to Waterloo. Traffic conditions for that journey are obtained automatically from the trusted user group. At the end of the afternoon, if the device is in Waterloo, the device will assume that the user is going to commute back to Toronto. Traffic conditions for the return drive to Toronto are obtained automatically from the trusted user group. On the weekend, the device may have learned that the user commutes to a cottage in Barrie. The user may belong to a different trusted user group (one that travels between Toronto and Barrie on the weekends). The traffic conditions for that journey are automatically obtained.

From the foregoing examples, it is apparent that the device may be configured to automatically obtain traffic conditions from trusted user groups whose users frequently commute to the same destination, thereby creating standing or permanent user groups.

The device may also belong to a traffic user group with a dynamically changing membership (i.e. users may join and withdraw from the group) provided that there is a minimal number of users on the same path at the same time. In a variant, the device may obtain data on how many users are contributing traffic data to the group. This gives the user an idea of how reliable the traffic data may be.

Furthermore, the device may have an artificial intelligence to learn travel patterns and to subscribe to user groups based on travel patterns. The device may furthermore make determinations about what traffic data is needed based on the current time and the current location of the device.

This new technology has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A method of providing real-time traffic information, the method comprising:
providing a user interface for defining a trusted group of mobile devices;
defining the trusted group of mobile devices by selecting the mobile devices associated with particular users traveling to a common destination;
obtaining traffic data from the mobile devices of the trusted group; and det
ermining traffic information based on the traffic data for a plurality of routes to the common destination.

2. The method as claimed in claim 1 further comprising displaying the traffic information for a plurality of alternate routes.

3. The method as claimed in claim 1 or claim 2 further comprising providing audible traffic information for a plurality of alternate routes.

4. The method as claimed in any one of claims 1 to 3 wherein defining the trusted group comprises selecting mobile devices associated with users who are invited to an event stored in a calendar application.

5. The method as claimed in any one of claims 1 to 4 wherein defining the trusted group comprises selecting mobile devices associated with users linked via a social network.

6. The method as claimed in any one of claims 1 to 5 wherein defining the trusted group comprises selecting mobile devices associated with users from an instant messaging group.

7. The method as claimed in any one of claims 1 to 6 wherein defining the trusted group comprises selecting mobile devices associated with e-mail addresses contained in fields of an e-mail message.

8. The method as claimed in any one of claims 1 to 7 wherein determining traffic information comprises:
obtaining historical driving data for each member of the trusted group;
adjusting the traffic data for each member of the trusted group based on the historical driving data for each respective member; and
determining an optimal alternate route based on adjusted traffic data.

9. A computer-readable medium comprising instructions in code which when loaded into memory and executed on a processor of a mobile device is adapted to perform the method of any one of claims 1 to 8.

10. A mobile device comprising:
a memory operatively coupled to a processor for executing a navigation application on the mobile device;
a user interface for defining a trusted group of mobile devices by selecting the mobile devices associated with particular users that are traveling to a common destination;
a radiofrequency transceiver operatively coupled to the processor for receiving real-time traffic data from the trusted group of mobile devices; and
wherein the user interface provides traffic information based on the real-time traffic data received from the trusted group of mobile devices.

11. The device as claimed in claim 10 wherein the user interface that provides the traffic information is a display that displays traffic information for a plurality of alternate routes.

12. The device as claimed in claim 10 or claim 11 wherein the user interface comprises a speaker and a text-to-speech module for providing audible traffic information for a plurality of alternate routes.

13. The device as claimed in any one of claims 10 to 12 wherein defining the trusted group comprises selecting mobile devices associated with users who are invited to an event stored in a calendar application.

14. The device as claimed in any one of claims 10 to 13 wherein defining the trusted group comprises selecting mobile devices associated with users linked via a social network.

15. The device as claimed in any one of claims 10 to 14 wherein defining the trusted group comprises selecting mobile devices associated with users from an instant messaging group.

## Patentansprüche

1. Ein Verfahren zum Vorsehen von Echtzeit-Verkehrsinformation, wobei das Verfahren aufweist:
Vorsehen einer Benutzerschnittstelle zum Definieren einer vertrauenswürdigen Gruppe von mobilen Vorrichtungen;
Definieren der vertrauenswürdigen Gruppe von mobilen Vorrichtungen durch Auswählen der mobilen Vorrichtungen, die mit bestimmten Benutzern assoziiert sind, die zu einem gemeinsamen Ziel unterwegs sind; Erlangen von Verkehrsdaten von den mobilen Vorrichtungen der vertrauenswürdigen Gruppe; und
Bestimmen von Verkehrsinformation basierend auf den Verkehrsdaten für eine Vielzahl von Routen zu dem gemeinsamen Ziel.

2. Das Verfahren gemäß Anspruch 1, das weiter ein Anzeigen der Verkehrsinformation für eine Vielzahl von alternativen Routen aufweist.

3. Das Verfahren gemäß Anspruch 1 oder Anspruch 2, das weiter ein Vorsehen von hörbarer Verkehrsinformation für eine Vielzahl von alternativen Routen aufweist.

4. Das Verfahren gemäß einem der Ansprüche 1 bis 3, wobei das Definieren der vertrauenswürdigen Gruppe ein Auswählen von mobilen Vorrichtungen aufweist, die mit Benutzern assoziiert sind, die zu einem Ereignis, das in einer Kalenderanwendung gespeichert ist, eingeladen sind.

5. Das Verfahren gemäß einem der Ansprüche 1 bis 4, wobei das Definieren der vertrauenswürdigen Gruppe ein Auswählen von mobilen Vorrichtungen aufweist, die mit Benutzern assoziiert sind, die über ein soziales Netzwerk verbunden sind.

6. Das Verfahren gemäß einem der Ansprüche 1 bis 5, wobei das Definieren der vertrauenswürdigen Gruppe ein Auswählen von mobilen Vorrichtungen aufweist, die mit Benutzern einer Instant-Messaging-Gruppe assoziiert sind.

7. Das Verfahren gemäß einem der Ansprüche 1 bis 6, wobei das Definieren der vertrauenswürdigen Gruppe ein Auswählen von mobilen Vorrichtungen aufweist, die mit Email-Adressen assoziiert sind, die in Feldern einer Email-Nachricht enthalten sind.

8. Das Verfahren gemäß einem der Ansprüche 1 bis 7, wobei das Bestimmen von Verkehrsinformation aufweist:
Erlangen von historischen Fahrdaten für jedes Mitglied der vertrauenswürdigen Gruppe;
Anpassen der Verkehrsdaten für jedes Mitglied der vertrauenswürdigen Gruppe basierend auf den historischen Fahrdaten für jedes jeweilige Mitglied; und
Bestimmen einer optimalen alternativen Route basierend auf den angepassten Verkehrsdaten.

9. Ein computerlesbares Medium, das Anweisungen in Code aufweist, die bei einem Laden in einen Speicher und Ausführen auf einem Prozessor einer mobilen Vorrichtung ausgebildet sind zum Durchführen des Verfahrens gemäß einem der Ansprüche 1 bis 8.

10. Eine mobile Vorrichtung, die aufweist:
einen Speicher, der operativ mit einem Prozessor gekoppelt ist zum Ausführen einer Navigationsanwendung auf der mobilen Vorrichtung; eine Benutzerschnittstelle zum Definieren einer vertrauenswürdigen Gruppe von mobilen Vorrichtungen durch Auswählen der mobilen Vorrichtungen, die mit bestimmten Benutzern assoziiert sind, die zu einem gemeinsamen Ziel unterwegs sind;
einen Funkfrequenz-Transceiver, der operativ mit dem Prozessor gekoppelt ist zum Empfangen von Echtzeit-Verkehrsdaten von der vertrauenswürdigen Gruppe von mobilen Vorrichtungen; und
wobei die Benutzerschnittstelle Verkehrsinformation basierend auf den Echtzeit-Verkehrsdaten vorsieht, die von der vertrauenswürdigen Gruppe von mobilen Vorrichtungen empfangen werden.

11. Die Vorrichtung gemäß Anspruch 10, wobei die Benutzerschnittstelle, die die Verkehrsinformation vorsieht, eine Anzeige ist, die Verkehrsinformation für eine Vielzahl von alternativen Routen anzeigt.

12. Die Vorrichtung gemäß Anspruch 10 oder Anspruch 11, wobei die Benutzerschnittstelle einen Lautsprecher und ein Text-zu-Sprache-Modul aufweist zum Vorsehen von hörbarer Verkehrsinformation für eine Vielzahl von alternativen Routen.

13. Die Vorrichtung gemäß einem der Ansprüche 10 bis 12, wobei das Definieren der vertrauenswürdigen Gruppe ein Auswählen von mobilen Vorrichtungen aufweist, die mit Benutzern assoziiert sind, die zu einem Ereignis, das in einer Kalenderanwendung gespeichert ist, eingeladen sind.

14. Die Vorrichtung gemäß einem der Ansprüche 10 bis 13, wobei das Definieren der vertrauenswürdigen Gruppe ein Auswählen von mobilen Vorrichtungen aufweist, die mit Benutzern assoziiert sind, die über ein soziales Netzwerk verbunden sind.

15. Die Vorrichtung gemäß einem der Ansprüche 10 bis 14, wobei das Definieren der vertrauenswürdigen Gruppe ein Auswählen von mobilen Vorrichtungen aufweist, die mit Benutzern einer Instant-Messaging-Gruppe assoziiert sind.

## Revendications

1. Procédé de fourniture d'informations de trafic en temps réel, le procédé comprenant :
la fourniture d'une interface utilisateur pour définir un groupe de confiance de dispositifs mobiles ;
la définition du groupe de confiance de dispositifs mobiles en sélectionnant les dispositifs mobiles associés à des utilisateurs particuliers se déplaçant vers une destination commune ;
l'obtention de données de trafic à partir des dispositifs mobiles du groupe de confiance ; et
la détermination d'informations de trafic sur la base des données de trafic pour une pluralité d'itinéraires vers la destination commune.

2. Procédé selon la revendication 1, comprenant en outre l'affichage des informations de trafic pour une pluralité d'itinéraires de rechange.

3. Procédé selon la revendication 1 ou la revendication 2, comprenant en outre la fourniture d'informations de trafic audibles pour une pluralité d'itinéraires de rechange.

4. Procédé selon l'une quelconque des revendications 1 à 3, dans lequel la définition du groupe de confiance comprend la sélection de dispositifs mobiles associés à des utilisateurs qui sont invités à un événement stocké dans une application d'agenda.

5. Procédé selon l'une quelconque des revendications 1 à 4, dans lequel la définition du groupe de confiance comprend la sélection de dispositifs mobiles associés à des utilisateurs reliés via un réseau social.

6. Procédé selon l'une quelconque des revendications 1 à 5, dans lequel la définition du groupe de confiance comprend la sélection de dispositifs mobiles associés à des utilisateurs d'un groupe de messagerie instantanée.

7. Procédé selon l'une quelconque des revendications 1 à 6, dans lequel la définition du groupe de confiance comprend la sélection de dispositifs mobiles associés à des adresses de courriel contenues dans des champs d'un message de courriel.

8. Procédé selon l'une quelconque des revendications 1 à 7, dans lequel la détermination d'informations de trafic comprend :
l'obtention de données de conduite historiques pour chaque membre du groupe de confiance ;
l'ajustement des données de trafic pour chaque membre du groupe de confiance sur la base des données de conduite historiques pour chaque membre respectif ; et
la détermination d'un itinéraire de rechange optimal sur la base de données de trafic ajustées.

9. Support lisible par ordinateur comprenant des instructions en code qui, lorsqu'il est chargé en mémoire et exécuté sur un processeur d'un dispositif mobile, est adapté pour effectuer le procédé selon l'une quelconque des revendications 1 à 8.

10. Dispositif mobile comprenant :
une mémoire couplée fonctionnellement à un processeur pour exécuter une application de navigation sur le dispositif mobile ;
une interface utilisateur pour définir un groupe de confiance de dispositifs mobiles en sélectionnant les dispositifs mobiles associés à des utilisateurs qui se déplacent vers une destination commune ;
un émetteur-récepteur radiofréquence couplé fonctionnellement au processeur pour recevoir des données de trafic en temps réel en provenance du groupe de confiance de dispositifs mobiles ; et
dans lequel l'interface utilisateur fournit des informations de trafic sur la base des données de trafic en temps réel reçues en provenance du groupe de confiance de dispositifs mobiles.

11. Dispositif selon la revendication 10, dans lequel l'interface utilisateur qui fournit les informations de trafic est un afficheur qui affiche des informations de trafic pour une pluralité d'itinéraires de rechange.

12. Dispositif selon la revendication 10 ou la revendication 11, dans lequel l'interface utilisateur comprend un haut-parleur et un module texte-parole pour fournir des informations de trafic audibles pour une pluralité d'itinéraires de rechange.

13. Dispositif selon l'une quelconque des revendications 10 à 12, dans lequel la définition du groupe de confiance comprend la sélection de dispositifs mobiles associés à des utilisateurs qui sont invités à un événement stocké dans une application d'agenda.

14. Dispositif selon l'une quelconque des revendications 10 à 13, dans lequel la définition du groupe de confiance comprend la sélection de dispositifs mobiles associés à des utilisateurs reliés via un réseau social.

15. Dispositif selon l'une quelconque des revendications 10 à 14, dans lequel la définition du groupe de confiance comprend la sélection de dispositifs mobiles associés à des utilisateurs d'un groupe de messagerie instantanée.
